# EUROPEAN PATENT SPECIFICATION

(11) **EP 2 879 070 B1**
(45) Date of publication and mention of the grant of the patent: **17.10.2018**
(21) Application number: 14003909.0
(22) Date of filing: 20.11.2014
(51) Int. Cl.: G06F 21/36, G06F 21/31, H04L 29/06

(54) **AUTHENTIFICATION DEVICE, AUTHENTIFICATION METHOD AND IMAGE FORMING APPARATUS**
AUTHENTIFIZIERUNGSVORRICHTUNG, AUTHENTIFIZIERUNGSVERFAHREN UND BILDERZEUGUNGSVORRICHTUNG
DISPOSITIF D'AUTHENTIFICATION, PROCÉDÉ D'AUTHENTIFICATION ET APPAREIL DE FORMATION D'IMAGE

(30) Priority: 28.11.2013 JP 2013246256
(43) Date of publication of application: 03.06.2015
(73) Proprietor: Kyocera Document Solutions Inc., Chuo-ku Osaka-shi Osaka 540-8585 (JP)
(72) Inventor: Eguchi, Takeshi, Osaka-shi, Osaka 540-8585 (JP)
(74) Representative: Müller-Boré & Partner Patentanwälte PartG mbB

(56) References cited:
- US-A1- 2008 127 302
- US-A1- 2013 036 342
- US-B1- 8 397 275

## Description

### BACKGROUND

The present invention relates to an authentication device and an authentication method for authenticating that not an automatic entry by a program of a computer but an entry is made by a human and an image forming apparatus with the authentication device.

CAPTCHA (Completely Automated Public Turning test to tell Computers and Humans Apart) authentication is for authenticating that not an automatic entry by a program of a computer but an entry is made by a human and also called image authentication. CAPTCHA authentication using a still image of a character string composed of distorted characters is widely known. In this CAPTCHA authentication, a still image of a character string composed of distorted characters is displayed, causing to enter that character string and the entry is authenticated to be the one made by a human if the entered character string matches the character string of the still image.

The CAPTCHA authentication is utilized, for example, as a measure against crawlers. A crawler is a program which periodically obtains information (documents, images, etc.) possessed by Web servers and automatically compiles a database.

With the development of a pattern matching technology, even a character string composed of distorted characters can be understood by a computer, which presents a problem of reducing the accuracy of CAPTCHA authentication.

Accordingly, a technology for improving the accuracy of CAPTCHA authentication has been proposed. This technology is as follows. An authentication server device generates challenge data so that one or more two-dimensional images each including one or more known symbols and one or more two-dimensional images each including one or more dummy symbols are presented to a user of one client at one time when receiving a request of service utilization determines whether or not the received response data matches one or more known symbols included in the challenge data, and permits the service utilization of a client device in response to the matching.

US 8,397,275 (Magdsick, 2013) discloses time-varying CAPTCHA tests to distinguish a human user from a computer software agent in an online application. A test generator generates an original image and a set of (X,Y) positions. The test generator then separates the original image to form a plurality of secondary images. The secondary images are configured to the (X,Y) positions and the original image so that when the secondary images are displaced over time responsive to the (X,Y) positions at least one of the (X,Y) position reveals the original image.

US 2008/127302 A1 (Qvarfordt Pernilla, 2008) discloses a graphical CAPTCHA wherein an initial image is displayed with a question. After the image changes, the user has to answer the question based on information he/she has seen before and after the image changed.

An object of the present invention is to provide an authentication device and an authentication method capable of improving accuracy in authenticating that not an automatic entry by a program of a computer but an entry is made by a human, and an image forming apparatus provided with the same.

### SUMMARY

An authentication device according to a first aspect of the present invention performs authentication using an element group image composed of bit-map data, the element group image which indicates an element group configured by arranging a plurality of elements, each element being one character or one symbol. The authentication device includes a screen data transmitter, an answer receiver and an authentication unit. The screen data transmitter transmits screen data representing an authentication screen to an accessing computer in order to display the authentication screen on a display unit of the computer, the authentication screen including the element group image, in which some or all of the plurality of elements change, a question answerable by looking at the element group image before a change and the element group image after the change and an answer entry box, the question being included in the authentication screen with at least either before or after the change of the element group image and the answer entry box being included in the authentication screen after the change of the element group image. The element group is a number, the question is to ask a sum of some digits out of the element group indicated by the element group image before the change and some digits out of the element group indicated by the element group image after the change. The answer receiver receives an answer entered in the answer entry box from the computer after the transmission of the screen data. The authentication unit determines the authentication to be succeeded if the answer received by the answer receiver is correct.

An authentication method according to a third aspect of the present invention is an authentication method for performing authentication using an element group image composed of bit-map data, the element group image which indicates an element group configured by arranging a plurality of elements, each element being one character or one symbol. The authentication method includes a screen data transmission step, an answer reception step and an authentication step. In the screen data transmission step, screen data representing an authentication screen is transmitted to an accessing computer in order to display the authentication screen on a display unit of the computer, the authentication screen including the element group image, in which some or all of the plurality of elements change, a question answerable by looking at the element group image before a change and the element group image after the change and an answer entry box, the question being included in the authentication screen with at least either before or after the change of the element group image and the answer entry box being included in the authentication screen after the change of the element group image. The element group is a number, the question is to ask a sum of some digits out of the element group indicated by the element group image before the change and some digits out of the element group indicated by the element group image after the change. In the answer reception step, an answer entered in the answer entry box is received from the computer after the screen data transmission step. In the authentication step, the authentication is determined to be succeeded if the answer received in the answer reception step is correct.

### BRIEF DESCRIPTION OF THE DRAWINGS

FIG. 1 is a diagram showing a network including a search site with a crawler,
FIG. 2 is a diagram showing a network including a Web server according to a first embodiment,
FIG. 3 is a block diagram showing the configuration of an authentication device provided in the Web server according to the first embodiment,
FIG. 4 is a diagram showing an example of an authentication screen including an element group image before a change,
FIG. 5 is a diagram showing an example of the authentication screen including the element group image after the change,
FIG. 6 is a diagram showing an example of an authentication screen including an element group image before a change in a second modification,
FIG. 7 is a diagram showing an example of the authentication screen including the element group image after the change in the second modification,
FIG. 8 is a diagram showing a network including an image forming apparatus according to a second embodiment,
FIG. 9 is a diagram schematically showing the internal structure of the image forming apparatus according to the second embodiment, and
FIG. 10 is a block diagram showing the configuration of the image forming apparatus shown in FIG. 9.

### DETAILED DESCRIPTION

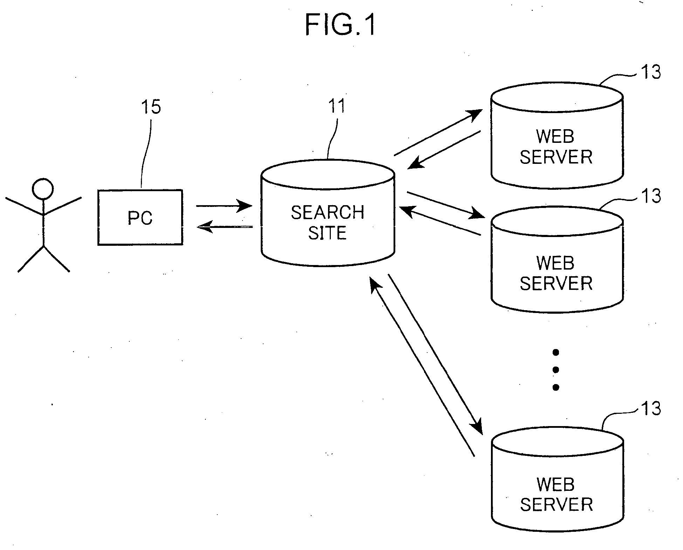

FIG. 1 is a diagram showing a network including a search site 11. The search site 11 is provided with a crawler. The crawler accesses a multitude of Web servers 13 on the network, obtains information from these Web servers 13 and compiles the obtained information into a database.

When a user accesses the search site 11 utilizing a personal computer 15, the search site 11 extracts information including a searched word from the database and transmits the extracted information as a search result to the personal computer 15.

It is not desired for the crawler to obtain the information possessed by the Web site 13 in some cases. For example, to prevent publications in PDF format from being collected, from a Web server of the Japanese Patent Office and compiled into a database and prevent business utilizing this database, it is necessary to prevent publications in PDF format possessed by the Web server of the Japanese Patent Office from being obtained by crawlers.

In the case of the Web server of the Japanese Patent Office, CAPTCHA authentication based on a number entry is utilized at the time of an access to a publication in PDF format. Whether the number entry is an automatic entry by the crawler or an entry by a human is determined so that the crawler cannot access the publication in PDF format.

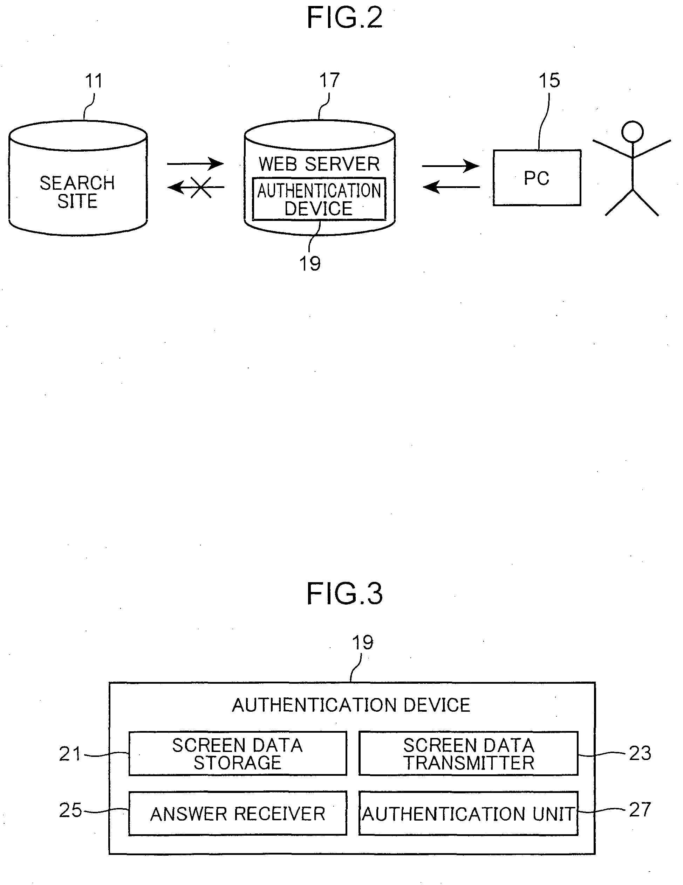

Embodiments include a first embodiment and a second embodiment. The first embodiment is first described. FIG. 2 is a diagram showing a network including a Web server 17 according to the first embodiment. FIG. 2 shows that information possessed by the Web server 17 cannot be obtained when a search site 11 accesses the Web server 17 utilizing a crawler, but can be obtained when a user (human) accesses the Web server 17 utilizing a personal computer 15.

FIG. 3 is a block diagram showing the configuration of an authentication device 19 provided in the Web server 17 according to the first embodiment.

The authentication device 19 includes a screen data storage 21, a screen data transmitter 23, an answer receiver 25 and an authentication unit 27.

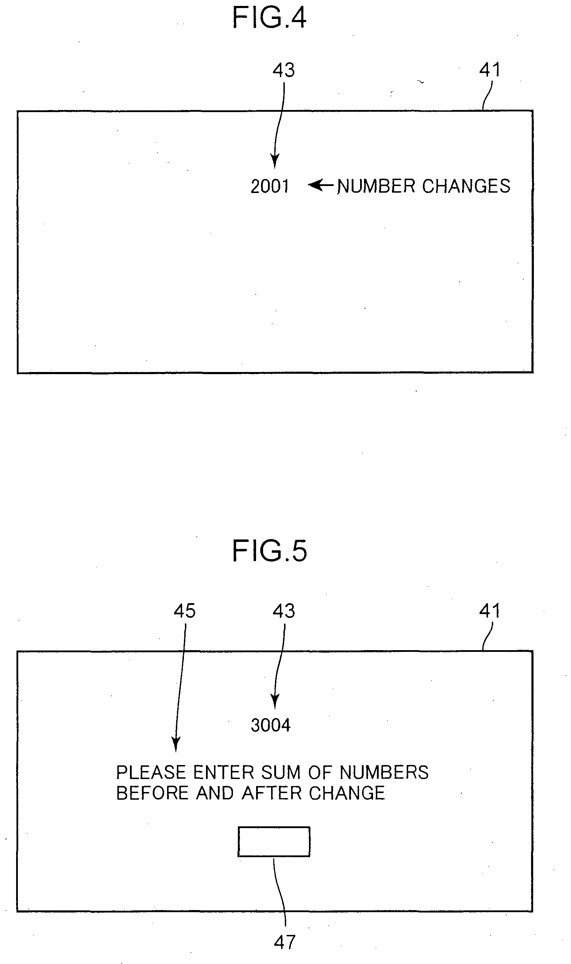

The screen data storage 21 stores screen data representing an authentication screen 41 shown in FIGs. 4 and 5 in advance. FIGs. 4 and 5 are diagrams showing examples of the authentication screen 41. The authentication screen 41 includes an element group image 43, a question 45 and an answer entry box 47. The element group image 43 is an image indicating an element group configured by arranging a plurality of elements, each element being one character or one symbol.

Accordingly, the element group image 43 means an image configured by arranging a combination of characters, an image configured by arranging a combination of symbols or an image configured by arranging a combination of characters and symbols. Characters include numbers, alphabets, Hiragana, Katakana, etc. Symbols include codes (e.g. %, #) other than characters. The elements may be distorted or may not be distorted in shape. In the first embodiment, an image indicating a four-digit number, each element (number) of which is not distorted in shape, is used as the element group image 43.

The element group image 43 is configured using not text data, but bit-map data. In the element group image 43, some or all of a plurality of elements constituting the element group change. The element group image 43 in FIG. 4 is the one before a change and the element group image 43 in FIG. 5 is the one after the change.

The question 45 is included in the authentication screen 41 with at least either before or after the change of the element group image 43. In the authentication screen 41 of the first embodiment, the question 45 is included in the authentication screen 41 after the change of the element group image 43 as shown in FIG. 5.

The question 45 is a content answerable by looking at the element group image 43 before the change and the element group image 43 after the change.

As shown in FIG. 5, the answer entry box 47 is included in the authentication screen 41 after the change of the element group image 43. The question 45 and the answer entry box 47 may be included in the both authentication screens 41 before and after the change of the element group image 43 (FIGs. 4 and 5).

Referring back to the description of FIG. 3, the screen data transmitter 23 reads screen data stored in the screen data storage 21 and transmits the read screen data to a computer accessing the Web server 17 including the authentication device 19 via the network in order to display the authentication screen 41 on a display unit of the accessing computer. Here, the computer means the search site 11 or the personal computer 15 of FIG. 2.

After the screen data transmitter 23 transmits the screen data, the answer receiver 25 receives the answer entered in the answer entry box 47 from the computer via the network.

The authentication unit 27 determines the authentication to be succeeded if the answer received by the answer receiver 25 is correct.

Next, the operation of the authentication device 19 is described using FIGs. 2 to 5. When the computer accesses the Web server 17 via the network, the screen data transmitter 23 reads the screen data stored in the screen data storage 21 and transmits the read screen data to the accessing computer via the network. The accessing computer is the personal computer 15 or the search site 11.

The authentication screen 41 shown in FIG. 4 is displayed on the display unit of the accessing computer. After the elapse of a predetermined time (e.g. 5 sec), element images included in the authentication screen 41 change as shown in FIG. 5.

The question 45 is "please enter the sum of numbers before and after a change". An answer can be made by looking at the element group image 43 before the change (FIG. 4) and the element group image 43 after the change (FIG. 5). Accordingly, a human can easily obtain a correct answer, whereas a crawler cannot easily obtain the correct answer.

The answer entered in the answer entry box 47 is transmitted to the Web server 17 via the network and received by the answer receiver 25. The authentication unit 27 determines the authentication to be succeeded if the answer received by the answer receiver 25 is correct while determining the authentication to be failed if the answer is incorrect.

Main effects of the first embodiment are described. In the authentication device 19, the question 45 answerable by looking at the element group image 43 before the change and the element group image 43 after the change is given and the authentication is determined to be succeeded if this question 45 is correctly answered. Thus, with a technique that a computer recognizes the element group images 43 utilizing pattern matching, it is difficult to correctly answer the question 45. Therefore, according to the authentication device 19, it is possible to improve accuracy in authenticating that not an automatic entry by a program of a computer but an entry is made by a human.

Although the element group image 43 composed of two still images is used as shown in FIGs. 4 and 5 in this embodiment, the element group image may be a moving image.

The first embodiment has first to third modifications. The first modification is first described. In the first embodiment, the same question 45 is used every time the authentication device 19 performs authentication. In the first modification, the question 45 is randomly changed every time the authentication device 19 performs authentication.

This is specifically described. The authentication device 19 of the first modification includes a screen data generator instead of the screen data storage 21 shown in FIG. 3. The screen data generator stores a plurality of questions 45 in advance. The screen data generator generates screen data representing an authentication screen 41 including the question 45 randomly selected from the plurality of questions 45 when a computer accesses the Web server 17 via the network. The screen data transmitter 23 transmits the generated screen data to the accessing computer.

As just described, in the first modification, the question 45 is randomly selected every time the authentication device 19 performs authentication. This is specifically described. It is assumed that the element group image 43 before the change is, for example, "19bd3" and the element group image 43 after the change is, for example, "3abd3". In this example, lower three elements "bd3" are not changed. The screen data generator stores, for example, three questions 4·5 in advance.

For example, the first question is "please enter changed characters". The second question is "please enter the second character of the changed ones". The third question is "please enter the first character of the changed ones and third and subsequent characters before the change". Incidentally, a correct answer to the first question is "3a". A correct answer to the second question is "a". A correct answer to the third question is "3bd3".

According to the first modification, it is difficult for a computer to grasp the question as compared with the case where the same question is given every time the authentication is performed. Thus, it is more difficult for the computer to give a correct answer to a question.

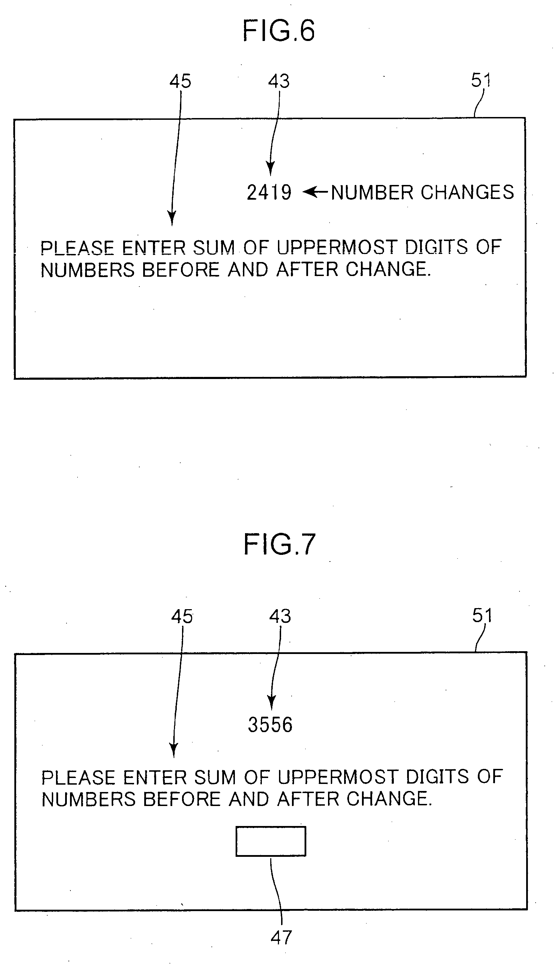

The second modification is described. FIGs. 6 and 7 are diagrams showing examples of an authentication screen 51 generated by an authentication device 19 of the second modification. An element group image 43 of FIG. 6 is the one before a change and an element group image 43 of FIG. 7 is the one after the change. A question 45 answerable by focusing attention on some digits (uppermost digit here) out of a four-digit number is included in the authentication screen 51 before the change of the element group image 43 (FIG. 6). An answer to the question 45 is entered in the answer entry box 47. Specifically, the second modification includes a screen data generator for generating screen data representing the authentication screen 51 including the question 45 answerable by looking at some of a plurality of elements constituting an element group together with the element group image 43 before the change. The screen data transmitter 23 of FIG. 3 transmits the screen data generated by the screen data generator to the accessing computer.

In the second modification, a target of the question 45 is limited to some of the plurality of elements constituting the element group and the question 45 is included in the authentication screen 51 including the element group image 43 before the change. Thus, a user (human) needs not memorize all of a plurality of elements constituting an element group. Therefore, according to the second modification, a burden on the user can be reduced.

The third modification is described. In the first embodiment, a time until the authentication screen 41 including the element group image 43 after the change (FIG. 5) is displayed on the display unit after the authentication screen 41 including the element group image 43 before the change (FIG. 4) is displayed on the display unit is constant (e.g. 5 sec) every time the authentication device 19 performs authentication. However, that time may be randomly set.

This is specifically described. An authentication device 19 of the third modification includes a screen data generator instead of the screen data storage 21 shown in FIG. 3. The screen data generator generates screen data for which a time until the authentication screen 41 including the element group image 43 after the change is displayed on the display unit after the authentication screen 41 including the element group image 43 before the change is displayed on the display unit is randomly set.

According to the third modification, since the time until the element group image 43 is changed after being displayed is random, it is difficult for a computer to capture a change of the element group image 43 as compared with the case where that time is constant. Thus, it is more difficult for the computer to correctly answer the question 45.

It is also possible to combine the first to third modifications.

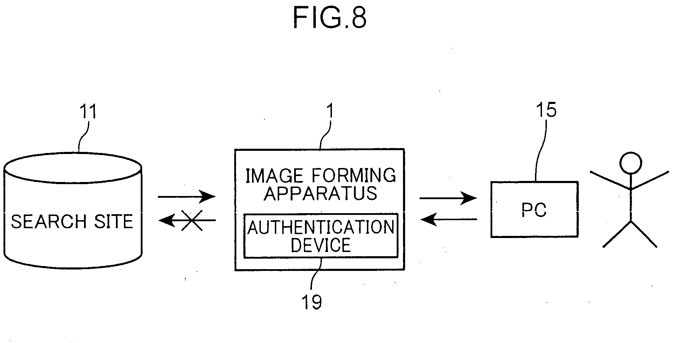

A second embodiment is described. Although the first embodiment relates to the Web server 17 including the authentication device 19, the second embodiment relates to an image forming apparatus 1 including an authentication device 19. FIG. 8 is a diagram showing a network including the image forming apparatus 1 according to the second embodiment. A difference from FIG. 2 is that the image forming apparatus 1 is provided instead of the Web server 17.

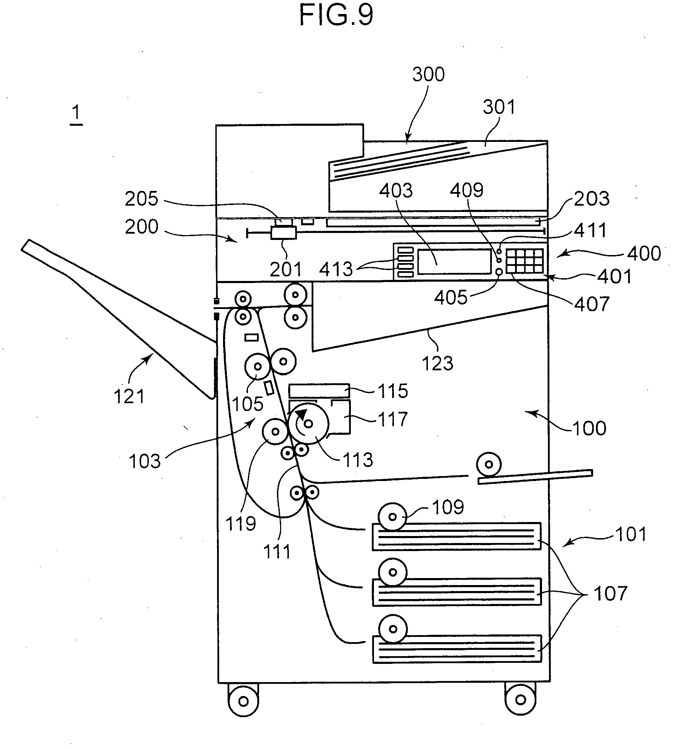

FIG. 9 is a diagram schematically showing the internal structure of the image forming apparatus 1 according to the second embodiment. The image forming apparatus 1 can be applied, for example, to a digital complex machine having functions of a copier, a printer, a scanner and a facsimile machine. The image forming apparatus 1 includes an apparatus main body 100, a document reading unit 200 arranged atop the apparatus main body 100, a document feeding unit 300 arranged atop the document reading unit 200 and an operation unit 400 arranged on the front surface of an upper part of the apparatus main body 100.

The document feeding unit 300 functions as an automatic document feeder and can feed a plurality of documents placed on a document placing portion 301 so that the documents are successively read by the document reading unit 200.

The document reading unit 200 includes a carriage 201 carrying an exposure lamp and the like, a document platen 203 made of a transparent material such as glass, an unillustrated CCD (Charge Coupled Device) sensor and a document reading slit 205. In the case of reading a document placed on the document platen 203, the document is read by the CCD sensor while the carriage 201 is moved in a longitudinal direction of the document platen 203. Contrary to this, in the case of reading a document fed from the document feeding unit 300, the carriage 201 is moved to a position facing the document reading slit 205 and the document fed from the document feeding unit 300 is read by the CCD sensor through the document reading slit 205. The CCD sensor outputs the read document image as image data.

The apparatus main body 100 includes a sheet storage unit 101, an image forming unit 103 and a fixing unit 105. The sheet storage unit 101 is arranged in a bottommost part of the apparatus main body 100 and includes sheet trays 107 capable of storing a stack of sheets. In the stack of sheets stored in the sheet tray 107, the uppermost sheet is fed toward a sheet conveyance path 111 by driving a pickup roller 109. The sheet is conveyed to the image forming unit 103 through the sheet conveyance path 111.

The image forming unit 103 forms a toner image on the sheet conveyed thereto. The image forming unit 103 includes a photoconductive drum 113, an exposure unit 115, a developing unit 117 and a transfer unit 119. The exposure unit 115 generates light modulated in response to image data (image data output from the document reading unit 200, image data transmitted from a personal computer, facsimile-received image data or the like) and irradiates the generated light to the uniformly charged circumferential surface of the photoconductive drum 113. In this way, an electrostatic latent image corresponding to the image data is formed on the circumferential surface of the photoconductive drum 113. By supplying toner to the circumferential surface of the photoconductive drum 113 from the developing unit 117 in this state, a toner image corresponding to the image data is formed on the circumferential surface. This toner image is transferred to a sheet conveyed from the previously described sheet storage unit 101 by the transfer unit 119.

The sheet having the toner image transferred thereto is fed to the fixing unit 105. In the fixing unit 105, the heat and pressure are applied to the toner image and the sheet, whereby the toner image is fixed to the sheet. The sheet is discharged to a stack tray 121 or a sheet discharge tray 123.

The operating unit 400 includes an operation key unit 401 and a display unit 403. The display unit 403 has a touch panel function and a screen including soft keys is displayed thereon. The user performs setting necessary to execute a copy function and the like by operating the soft keys while looking at the screen.

The operation key unit 401 includes operation keys which are hard keys. Specifically, the operation key unit 401 includes a start key 405, a numeric keypad 407, a stop key 409, a reset key 411, function changeover keys 413 for switching copy, print, scan and facsimile functions from one to another, and the like.

The start key 405 is a key for starting an operation such as copying or facsimile transmission. The numeric keypad 407 is a keypad used to enter numbers such as the number of copies and facsimile numbers. The stop key 409 is a key for stopping a copying operation or the like in the middle. The reset key 411 is a key for returning the set content to an initially set state.

The function changeover keys 413 are keys including a copy key, a transmit key and the like and used to switch a copy function, a transmit function and the like from one to another. If the copy key is operated, an initial screen for copying is displayed on the display unit 403. If the transmit key is operated, an initial screen for facsimile transmission and email transmission is displayed on the display unit 403.

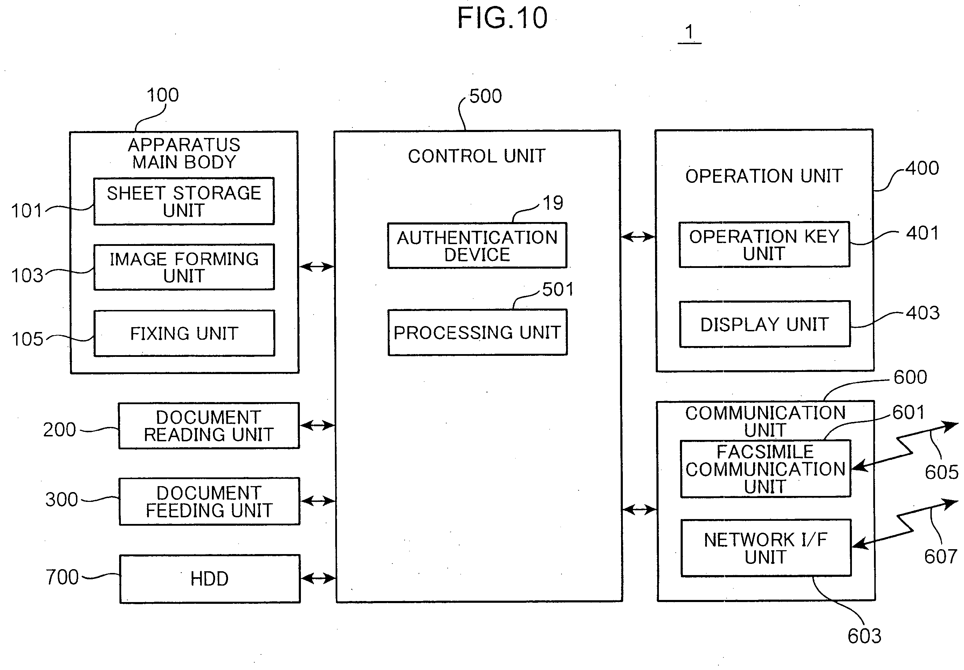

FIG. 10 is a block diagram showing the configuration of the image forming apparatus 1 shown in FIG. 9. The image forming apparatus 1 is so configured that the apparatus main body 100, the document reading unit 200, the document feeding unit 300, the operating unit 400, a controlling unit 500, a communicating unit 600 and an HDD 700 are connected to each other by a bus. The apparatus main body 100, the document reading unit 200, the document feeding unit 300 and the operation unit 400 are not described since being already described.

The control unit 500 includes a CPU (Central Processing Unit), a ROM (Read Only Memory), a RAM (Random Access Memory), an image memory and the like. The CPU executes a control necessary to operate the image forming apparatus 1 on the above constituent elements of the image forming apparatus 1 such as the apparatus main body 100. The ROM stores software necessary to control the operation of the image forming apparatus 1. The RAM is used such as to temporarily store data generated during the execution of the software and store application software. The image memory temporarily stores image data (image data output from the document reading unit 200, image data transmitted from a personal computer, facsimile-received image data or the like).

The control unit 500 includes an authentication device 19 and a processing unit 501 as function blocks. These are described later.

The communication unit 600 includes a facsimile communication unit 601 and a network I/F unit 603. The facsimile communication unit 601 includes an NCU (Network Control Unit) for controlling a telephone line connection with a destination facsimile machine and a modulation/demodulation circuit for modulating/demodulating a signal for facsimile communication. The facsimile communication unit 601 is connected to a telephone line 605.

The network I/F unit 603 is connected to a LAN (Local Area Network) 607. The network I/F unit 603 is a communication interface circuit for carrying out communication with terminal units such as personal computers connected to the LAN 607.

The HDD 700 is an example of an image data storage and built in the image forming apparatus 1. The HDD 700 are utilized to store (accumulate) image data output from the document reading unit 200, image data transmitted from personal computers via the communication unit 600, image data facsimile-received via the communication unit 600 and the like.

The authentication device 19 is not described since being the same as the authentication device 19 of the first embodiment.

The processing unit 501 causes the authentication device 19 to perform authentication when a request to access selected image data is made via a network. The selected image data is image data which is accumulated in the HDD 700 and selected by a user. The processing unit 501 permits an access to the selected image data if the authentication by the authentication device 19 is succeeded. The processing unit 501 determines that a crawler has accessed and performs any one of the following processings (1) to (4) if the authentication by the authentication device 19 is failed.
(1) The processing unit 501 transfers the selected image data to a local storage inaccessible via the network. According to the processing (1), the image data for which the access request was made can be transferred to a safe place while being held.
(2) The processing unit 501 deletes the selected image data. According to the processing (2), even if the crawler finds out a correct answer later, the crawler cannot access that image data since that image data is already deleted.
(3) The processing unit 501 sets to deny an access to the selected image data. According to the processing (3), even if the crawler finds out a correct answer later, the crawler cannot access that image data since it is already set to deny an access to that image data. For example, it can be set to deny the access to that image data by setting an attribute of the image data to an access denial.
(4) The processing unit 501 encrypts the selected image data. According to the processing (4), even if the crawler finds out a correct answer later and succeeds in accessing that image data, the crawler cannot understand the content of that image data since that image data is encrypted. A key for decrypting the encrypted image data is transmitted to a personal computer of an administrator of the image forming apparatus 1.

Which of the above processings (1) to (4) is to be performed can be set in the processing unit 501 in advance by operating the operation unit 400.

The authentication unit 27 (FIG. 3) may immediately determine the authentication to be failed if the answer entered in the answer entry box 47 (FIG. 5) is incorrect. However, some peoples may not be able to correctly answer at one time. If the answer is incorrect, the authentication device 19 may give the same question 45 again up to predetermined number of times and determine the authentication to be succeeded if the answer is correct while determining the authentication to be failed if the question is consecutively incorrectly answered a predetermined number of times.

Main effects of the second embodiment are described. The image forming apparatus 1 according to the second embodiment includes the authentication device 19 and determines that the selected image data is threatened by a computer program such as a crawler if the authentication is failed. Accordingly, the processing unit 501 performs any one of the above processings (1) to (4) for that image data, thereby protecting that image data from the computer program such as the crawler.

Although the present disclosure has been fully described by way of example with reference to the accompanying drawings, it is to be understood that various changes and modifications will be apparent to those skilled in the art. Therefore, unless otherwise such changes and modifications depart from the scope of the present disclosure hereinafter defined, they should be construed as being included therein.

## Claims

1. An authentication device (19) for performing authentication using an element group image (43) composed of bit-map data, the element group image which indicates an element group configured by arranging a plurality of elements, each element being one character or one symbol, comprising:
a screen data transmitter (23) for transmitting screen data representing an authentication screen (41) to an accessing computer in order to display the authentication screen on a display unit of the computer, the authentication screen including the element group image, in which some or all of the plurality of elements change, a question (45) answerable by looking at the element group image before a change and the element group image after the change and an answer entry box (47), the question being included in the authentication screen with at least either before or after the change of the element group image and the answer entry box being included in the authentication screen after the change of the element group image;
an answer receiver (25) for receiving an answer entered in the answer entry box from the computer after the transmission of the screen data; and
an authentication unit (27) for determining the authentication to be succeeded if the answer received by the answer receiver is correct, **characterised in that** the element group is a number, the question is to ask a sum of some digits out of the element group indicated by the element group image before the change and some digits out of the element group indicated by the element group image after the change.

2. An authentication device according to claim 1, further comprising a screen data generator for generating the screen data.

3. An authentication device according to claim 2, wherein the screen data generator generates the screen data for which a time until the authentication screen including the element group image after the change is displayed on the display unit after the authentication screen including the element group image before the change is displayed on the display unit is randomly set.

4. The authentication device according to claim 2 or 3, wherein the screen data generator stores a plurality of the questions in advance and generates the screen data representing the authentication screen including the question randomly selected from the plurality of questions.

5. The authentication device according to any one of claims 2 to 4, wherein the screen data generator generates the screen data representing the authentication screen including the question answerable by looking at some of the plurality of elements constituting the element group together with the element group image before the change.

6. An authentication method for performing authentication using an element group image composed of bit-map data, the element group image which indicates an element group configured by arranging a plurality of elements, each element being one character or one symbol, comprising:
a screen data transmission step of transmitting screen data representing an authentication screen to an accessing computer in order to display the authentication screen on a display unit of the computer, the authentication screen including the element group image, in which some or all of the plurality of elements change, a question answerable by looking at the element group image before a change and the element group image after the change and an answer entry box, the question being included in the authentication screen with at least either before or after the change of the element group image and the answer entry box being included in the authentication screen after the change of the element group image;
an answer reception step of receiving an answer entered in the answer entry box from the computer after the screen data transmission step; and
an authentication step of determining the authentication to be succeeded if the answer received in the answer reception step is correct, **characterised in that** the element group is a number, the question is to ask a sum of some digits out of the element group indicated by the element group image before the change and some digits out of the element group indicated by the element group image after the change.

## Patentansprüche

1. Eine Authentifizierungsvorrichtung (19) zum Durchführen einer Authentifizierung unter Verwendung eines Elementgruppenbildes (43), das aus Bitmap-Daten besteht, wobei das Elementgruppenbild, das eine Elementgruppe anzeigt, durch Anordnen einer Vielzahl von Elementen konfiguriert ist, wobei jedes Element ein Zeichen oder ein Symbol ist, die Folgendes umfasst:
einen Bildschirmdaten-Sender (23) zum Übertragen von Bildschirmdaten, die einen Authentifizierungsbildschirm (41) darstellen, an einen zugreifenden Computer, um den Authentifizierungsbildschirm auf einer Anzeigeeinheit des Computers anzuzeigen, wobei der Authentifizierungsbildschirm Folgendes enthält: das Elementgruppenbild, in dem sich einige oder alle der mehreren Elemente ändern, eine Frage (45), die beantwortet werden kann durch Betrachten des Elementgruppenbildes vor einer Änderung und des Elementgruppenbildes nach der Änderung, und ein Antwort-Eingabefeld (47), wobei die Frage im Authentifizierungsbildschirm zumindest entweder vor oder nach der Änderung des Elementgruppenbildes und das Antwort-Eingabefeld im Authentifizierungsbildschirm nach der Änderung des Elementgruppenbildes enthalten ist;
einen Antwortempfänger (25) zum Empfangen einer in das Antwort-Eingabefeld eingegebenen Antwort vom Computer nach der Übertragung der Bildschirmdaten; und
eine Authentifizierungseinheit (27) zur Bestimmung der erfolgreichen Authentifizierung, wenn die vom Antwortempfänger empfangene Antwort korrekt ist,
**dadurch gekennzeichnet, dass**
die Elementgruppe eine Zahl ist, die Frage, die es zu stellen gilt, eine Summe ist von einigen Ziffern aus der Elementgruppe, die durch das Elementgruppenbild vor der Änderung und von einigen Ziffern aus der Elementgruppe, die durch das Elementgruppenbild nach der Änderung angezeigt wird.

2. Eine Authentifizierungsvorrichtung nach Anspruch 1, ferner umfassend einem Bildschirmdatengenerator zur Erzeugung der Bildschirmdaten.

3. Eine Authentifizierungsvorrichtung nach Anspruch 2, wobei der Bildschirmdatengenerator die Bildschirmdaten erzeugt, für die eine Zeitspanne bis der Authentifizierungsbildschirm einschließlich des Elementgruppenbildes nach der Änderung auf der Anzeigeeinheit angezeigt wird, nachdem der Authentifizierungsbildschirm einschließlich des Elementgruppenbildes vor der Änderung auf der Anzeigeeinheit angezeigt wird, zufällig eingestellt ist.

4. Eine Authentifizierungsvorrichtung nach Anspruch 2 oder 3, wobei der Bildschirmdatengenerator eine Vielzahl der Fragen im Voraus speichert und die Bildschirmdaten erzeugt, die den Authentifizierungsbildschirm darstellen, einschließlich der zufällig aus der Vielzahl der Fragen ausgewählten Frage.

5. Eine Authentifizierungsvorrichtung nach irgendeinem der Ansprüche von 2 bis 4, wobei der Bildschirmdatengenerator die Bildschirmdaten erzeugt, die den Authentifizierungsbildschirm darstellen, einschließlich der Frage, die beantwortet werden kann, indem einige der mehreren Elemente, die die Elementgruppe bilden, zusammen mit dem Elementgruppenbild vor der Änderung betrachtet werden.

6. Ein Authentifizierungsverfahren zum Durchführen einer Authentifizierung unter Verwendung eines Elementgruppenbildes, das aus Bitmap-Daten besteht, wobei das Elementgruppenbild, das eine Elementgruppe anzeigt, durch Anordnen einer Vielzahl von Elementen konfiguriert ist, wobei jedes Element ein Zeichen oder ein Symbol ist, das Folgendes umfasst:
einen Bildschirmdatenübertragungsschritt zum Übertragen von Bildschirmdaten, die einen Authentifizierungsbildschirm darstellen, an einen zugreifenden Computer, um den Authentifizierungsbildschirm auf einer Anzeigeeinheit des Computers anzuzeigen, wobei der Authentifizierungsbildschirm Folgendes enthält: das Elementgruppenbild, in dem sich einige oder alle der mehreren Elemente ändern, eine Frage, die beantwortet werden kann durch Betrachten des Elementgruppenbildes vor einer Änderung und des Elementgruppenbildes nach der Änderung, und ein Antwort-Eingabefeld (47), wobei die Frage im Authentifizierungsbildschirm zumindest entweder vor oder nach der Änderung des Elementgruppenbildes und das Antwort-Eingabefeld im Authentifizierungsbildschirm nach der Änderung des Elementgruppenbildes enthalten ist;
einen Antwort-Empfangsschritt des Empfangens einer in das Antwort-Eingabefeld eingegebenen Antwort vom Computer nach der Übertragung der Bildschirmdaten; und
einen Authentifizierungsschritt zum Bestimmen der erfolgreichen Authentifizierung, wenn die vom Antwortempfänger empfangene Antwort korrekt ist,
**dadurch gekennzeichnet, dass**
die Elementgruppe eine Zahl ist, die Frage, die es zu stellen gilt, eine Summe ist von einigen Ziffern aus der Elementgruppe, die durch das Elementgruppenbild vor der Änderung und von einigen Ziffern aus der Elementgruppe, die durch das Elementgruppenbild nach der Änderung angezeigt wird.

## Revendications

1. Un dispositif d'authentification (19) pour effectuer une authentification en utilisant une image de groupe d'éléments (43) composée de données en mode point (*bit-map data*), l'image de groupe d'éléments qui indique un groupe d'éléments étant configurée en agençant une pluralité d'éléments, chaque élément étant un caractère ou un symbole, comprenant :
un émetteur de données d'écran (23) pour transmettre des données d'écran représentant un écran d'authentification (41) à un ordinateur accédant afin d'afficher l'écran d'authentification sur une unité d'affichage de l'ordinateur, l'écran d'authentification incluant : l'image de groupe d'éléments, dans laquelle certains ou tous les éléments de la pluralité d'éléments changent, une question (45) à laquelle on peut répondre en regardant l'image de groupe d'éléments avant un changement et l'image de groupe d'éléments après le changement, et une case d'entrée de réponse (47), la question étant incluse dans l'écran d'authentification au moins avant ou après le changement de l'image de groupe d'éléments et la case d'entrée de réponse étant incluse dans l'écran d'authentification après le changement de l'image de groupe d'éléments ;
un récepteur de réponse (25) pour recevoir une réponse entrée dans la case d'entrée de réponse de l'ordinateur après la transmission des données d'écran ; et
une unité d'authentification (27) pour déterminer que l'authentification est réussie si la réponse reçue par le destinataire de la réponse est correcte,
**caractérisé en ce que**
le groupe d'éléments est un nombre, que la question est de demander une somme de quelques chiffres du groupe d'éléments indiqué par l'image de groupe d'éléments avant le changement et de quelques chiffres du groupe d'éléments indiqué par l'image de groupe d'éléments après le changement.

2. Un dispositif d'authentification d'après la revendication 1, comprenant en outre un générateur de données d'écran pour générer les données d'écran.

3. Un dispositif d'authentification d'après la revendication 2, sachant que le générateur de données d'écran génère les données d'écran pour lesquelles un temps jusqu'à ce que l'écran d'authentification incluant l'image de groupe d'éléments après le changement est affiché sur l'unité d'affichage après que l'écran d'authentification incluant l'image de groupe d'éléments avant que le changement soit affiché sur l'unité d'affichage est défini de manière aléatoire.

4. Un dispositif d'authentification d'après la revendication 2 ou 3, sachant que le générateur de données d'écran stocke une pluralité de questions à l'avance et génère les données d'écran représentant l'écran d'authentification, y compris la question choisie au hasard parmi la pluralité de questions.

5. Un dispositif d'authentification d'après l'une quelconque des revendications 2 à 4, sachant que le générateur de données d'écran génère les données d'écran représentant l'écran d'authentification incluant la question à laquelle on peut répondre en regardant certains éléments de la pluralité d'éléments constituant le groupe d'éléments ainsi que l'image de groupe d'éléments avant le changement.

6. Un procédé d'authentification pour effectuer une authentification en utilisant une image de groupe d'éléments composée de données en mode point (*bit-map data*), l'image de groupe d'éléments qui indique un groupe d'éléments étant configuré en agençant une pluralité d'éléments, chaque élément étant un caractère ou un symbole, comprenant :
une étape de transmission de données d'écran consistant à transmettre des données d'écran représentant un écran d'authentification à un ordinateur accédant afin d'afficher l'écran d'authentification sur une unité d'affichage de l'ordinateur, l'écran d'authentification incluant : l'image de groupe d'éléments, dans laquelle certains ou tous les éléments de la pluralité d'éléments changent, une question à laquelle on peut répondre en regardant l'image de groupe d'éléments avant un changement et l'image de groupe d'éléments après le changement, et une case d'entrée de réponse, la question étant incluse dans l'écran d'authentification au moins avant ou après le changement de l'image de groupe d'éléments et la case d'entrée de réponse étant incluse dans l'écran d'authentification après le changement de l'image de groupe d'éléments ;
une étape de réception de réponse consistant à recevoir une réponse entrée dans la case d'entrée de réponse de l'ordinateur après la transmission des données d'écran ; et
une étape d'authentification consistant à déterminer que l'authentification est réussie si la réponse reçue par le destinataire de la réponse est correcte,
**caractérisé en ce que**
le groupe d'éléments est un nombre, que la question est de demander une somme de quelques chiffres du groupe d'éléments indiqué par l'image de groupe d'éléments avant le changement et de quelques chiffres du groupe d'éléments indiqué par l'image de groupe d'éléments après le changement.
